# EUROPEAN PATENT APPLICATION

(11) **EP 2 566 124 A1**
(43) Date of publication of application: **06.03.2013**
(21) Application number: 10850505.8
(22) Date of filing: 30.04.2010
(51) Int. Cl.: H04L 29/06

(54) **METHOD, DEVICE AND SYSTEM FOR ESTABLISHING COLLABORATIVE SESSIONS**

(71) Applicant: Huawei Technologies Co., Ltd., Shenzhen, Guangdong 518129 (CN)
(72) Inventor: YANG, Lili, Shenzhen Guangdong 518129 (CN); GEORG, Mayer, Shenzhen Guangdong 518129 (CN)
(74) Representative: Haley, Stephen
(86) International application number: PCT/CN2010/072390
(87) International publication number: WO 2011/134172

(57) **Abstract**

The present invention discloses a method, a device, and a system for establishing a collaborative session, and belongs to the field of communication. The method includes: receiving, by a network control device, a session establishment request that carries media stream description information and is sent by a control UE; and according to the media stream description information carried in the received session establishment request, establishing, by the network control device, on the control UE a media stream with a remote UE, and establishing on a controlled UE a media stream with the remote UE. In the present invention, the control UE sends to the network control device the session establishment request that carries the media stream description information, so that the network control device establishes the media stream on the controlled UE with the remote UE and establishes the media stream on the controlled UE with the remote UE, thereby enabling the media streams to be established on different UEs at the same time.

## Description

### FIELD OF THE INVENTION

The present invention relates to the field of communications, and in particular, to a method, a device, and a system for establishing a collaborative session.

### BACKGROUND OF THE INVENTION

In the SIP (Session Initiation Protocol, session initiation protocol), a multimedia session is formed by a group of one or more multimedia senders and receivers, and data streams between them. In a collaborative session scene, a local end has two or more UEs (User Equipment, user equipment). A UE that initiates control operations such as media handover, addition, and modification is called a control UE. The rest UEs are called controlled UEs. When the multimedia session is described, the SDP (Session Description Protocol, session description protocol) application layer protocol which is used in the SIP protocol is adopted.

In the prior art, when a media stream connection is established between the control UE and a remote UE, the control UE sends request information to hand over all or a part of media streams to the controlled UEs for establishment.

In a process of realizing the present invention, the inventor finds that the prior art at least has the following disadvantages:

The control UE can hand over the media streams to the controlled UEs to realize establishment of the collaborative session only in a media stream handover scene.

### SUMMARY OF THE INVENTION

To solve disadvantages in the prior art, embodiments of the present invention provide a method, a device, and a system for establishing a collaborative session. The technical solutions are as follows:

In one aspect, a method for establishing a collaborative session is provided, where the method includes:
receiving, by a network control device, a session establishment request sent by a control user equipment UE, where the session establishment request carries media stream description information; and
according to the media stream description information carried in the received session establishment request, establishing, by the network control device, on the control UE a media stream with a remote UE, and establishing on a controlled UE a media stream with the remote UE.

In another aspect, a control user equipment UE is further provided, where the control UE includes:
a sending module, configured to send a session establishment request that carries media stream description information to a network control device, so that according to the media stream description information, the network control device establishes on the control UE a media stream with a remote UE, and establishes on a controlled UE a media stream with the remote UE; and
an establishing module, configured to establish a media stream with the remote UE through the network control device.

A network control device is further provided, where the network control device includes:
a receiving module, configured to receive a session establishment request sent by a control user equipment UE, where the session establishment request carries media stream description information; and
an establishing module, configured to, according to the media stream description information carried in the session establishment request which is received by the receiving module, establish on the control UE a media stream with a remote UE, and establish on a controlled UE a media stream with the remote UE.

A system for establishing a collaborative session is further provided, where the system includes a control user equipment UE and a network control device;
the control UE is the foregoing control UE; and
the network control device is the foregoing network control device.

A beneficial effect of the technical solutions provided in the embodiments of the present invention is:

The session establishment request sent by the control UE to the network control device carries media stream description information, which is used to instruct that a media stream be established on the control UE with the remote UE and a media stream be established on the controlled UE with the remote UE, so that the network control device may establish media streams on the control UE and the controlled UE with the remote UE at the same time according to the media stream description information, thereby realizing that media streams are established on different UEs at the same time.

### BRIEF DESCRIPTION OF THE DRAWINGS

To describe the technical solutions in the embodiments of the present invention more clearly, the accompanying drawings required for describing the embodiments are introduced briefly in the following. Apparently, the accompanying drawings in the following description are only some embodiments of the present invention, and persons skilled in the art may still derive other drawings based on these accompanying drawings without creative efforts.
FIG. 1 is a flow chart of a method for establishing a collaborative session according to a first embodiment of the present invention;
FIG. 2 is a flow chart of a method for establishing a collaborative session according to a second embodiment of the present invention;
FIG. 3 is a flow chart of a method for establishing a collaborative session according to a third embodiment of the present invention;
FIG. 4 is a schematic structural diagram of a control user equipment according to a fourth embodiment of the present invention;
FIG. 5 is a schematic structural diagram of a network control device according to a fifth embodiment of the present invention;
FIG. 6 is a schematic structural diagram of an establishing module in a network control device according to a fifth embodiment of the present invention;
FIG. 7 is a schematic structural diagram of another establishing module in a network control device according to a fifth embodiment of the present invention;
FIG. 8 is a schematic structural diagram of a system for establishing a collaborative session according to a sixth embodiment of the present invention.

### DETAILED DESCRIPTION OF THE EMBODIMENTS

To make the objectives, the technical solutions, and the advantages of the present invention clearer, the implementation manners of the present invention are further described in detail in the following with reference to the accompanying drawings.

### Embodiment 1

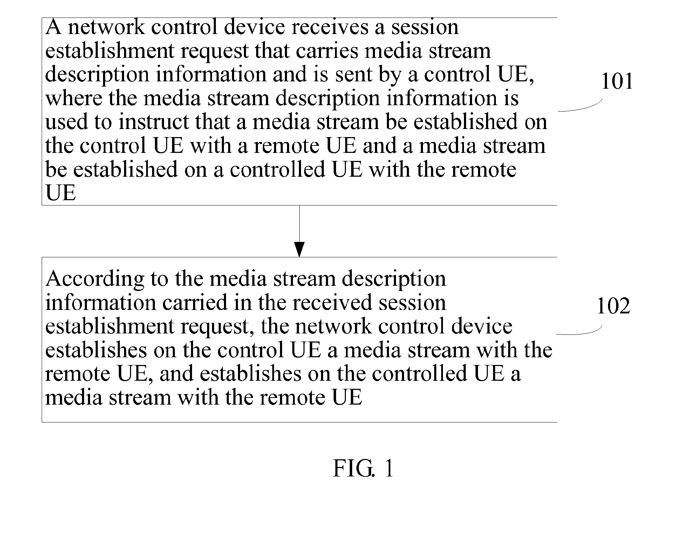

Referring to FIG. 1, an embodiment provides a method for establishing a collaborative session. A process of the method is specifically as follows:

101: A network control device receives a session establishment request that carries media stream description information and is sent by a control UE, where the media stream description information is used to instruct that a media stream be established on the control UE with a remote UE and a media stream be established on a controlled UE with the remote UE.

102: According to the media stream description information carried in the received session establishment request, the network control device establishes on the control UE a media stream with the remote UE, and establishes on the controlled UE a media stream with the remote UE.

Specifically, the media stream description information includes address information of the controlled UE, and is used to instruct that a media stream be established on the controlled UE.

C-line (Connection Date, connection information) in the SDP is used to indicate an address for establishing a media stream. The C-line includes a network type, an address type, and a specific address. And the network type defines IN (Intelligent Network, intelligent network), and PSTN (Public Switched Telephone Network, public switched telephone network). The address type defines IPv4 (Internet Protocol version 4, Internet Protocol version 4), and IPv6 (Internet Protocol version 6, Internet Protocol version 6). Therefore, in order that the media stream description information includes address information of the controlled UE, in the method provided in this embodiment, a new network type and a new address type are defined in the connection information C-line in the session description protocol SDP, and the address information of the controlled UE is described through the new network type and the new address type.

In this embodiment, the new network type and the new address type that are defined are not limited. For example, the defined new network type may be: "SIP", or "URL (Universal Resource Locator, universal resource locator)", or "TEL", or "URI (Universal Resource Indicator, universal resource indicator)"; the defined new address type may be: "SIPURI", or "SIPSURI", or "TELURI", which is used to indicate an address of an SIP or SIPS type. Then, extended C-line may be:
c=SIP SIPURI sip:mediaserver.example.net;
or c=SIP SIPSURI sips:secure-stream@mediaserver.example.net;
or c=URL SIPURI sip:stream@mediaserver.example.net;
or c=URL SIPSURI sips:secure-stream@mediaserver.example.net;
or c=TEL TELURI tel:+1-201-555-0123.

Further, according to the media stream description information carried in the received session establishment request, the network control device establishes the media stream on the controlled UE with the remote UE, which specifically includes:
acquiring media stream information on the controlled UE and media stream information on the remote UE, sending acquired media stream information that is on the controlled UE to the remote UE, and sending acquired media stream information that is on the remote UE to the controlled UE.

In the method provided in this embodiment, the session establishment request that is sent by the control UE to the network control device carries the media stream description information, which is used to instruct that a media stream be established on the control UE with the remote UE and a media stream be established on the controlled UE with the remote UE, so that the network control device may establish media streams on the control UE and the controlled UE with the remote UE at the same time according to the media stream description information, thereby realizing that media streams are established on different UEs at the same time. Further, signaling control may be kept on the control UE.

### Embodiment 2

This embodiment provides a method for establishing a collaborative session. In this method, address information of a controlled UE is carried in C-line of the SDP by defining a new network type, a new address type, and a corresponding address, so that a network control device establishes a media stream on the controlled UE with a remote UE according to media stream description information carried in a received session establishment request, which specifically includes:
the network control device sends a session establishment request to the controlled UE, and acquires media stream information on the controlled UE according to a session establishment response returned by the controlled UE;
sends a session establishment request to the remote UE, where the session establishment request sent to the remote UE carries acquired media stream information on the controlled UE, and acquires media stream information on the remote UE according to a session establishment response returned by the remote UE; and
sends acquired media stream information on the remote UE to the controlled UE.

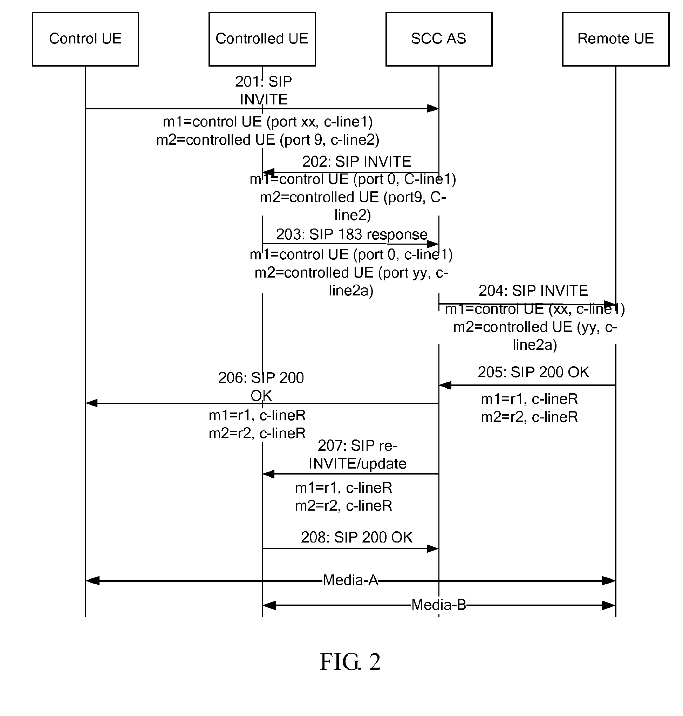

For ease of description, this embodiment takes the following case as an example to describe in detail the method for establishing a collaborative session provided in this embodiment: The network control device is an SCC AS (Service Centralized and Continuity AS, service centralized and continuity server), a voice media stream A is established on a control UE A1, an IP address is 192.0.2.5, and C-line of the SDP is :m=audio 49170 RTP/AVP 0 8 3, c=IN IP4 192.0.2.5; a video media stream B is established on a controlled UE A2, and its SIP address sip:a2@example2.net is saved on the control UE A1; description of the C-line in the extended SDP is m=video 9 RTP/AVP 34, c=URL SIPURI sip:a2@example2.net. Referring to FIG. 2, a process of the method is specifically as follows:
201: The control UE sends an SIP INVITE request for establishing a collaborative session to the SCC AS, where the request carries media stream description information, and the media stream description information is used to instruct that a media stream be established on the control UE with the remote UE and a media stream be established on the controlled UE with the remote UE.

Content of the SIP INVITE request in this step may be as shown in Table 1 in the following:

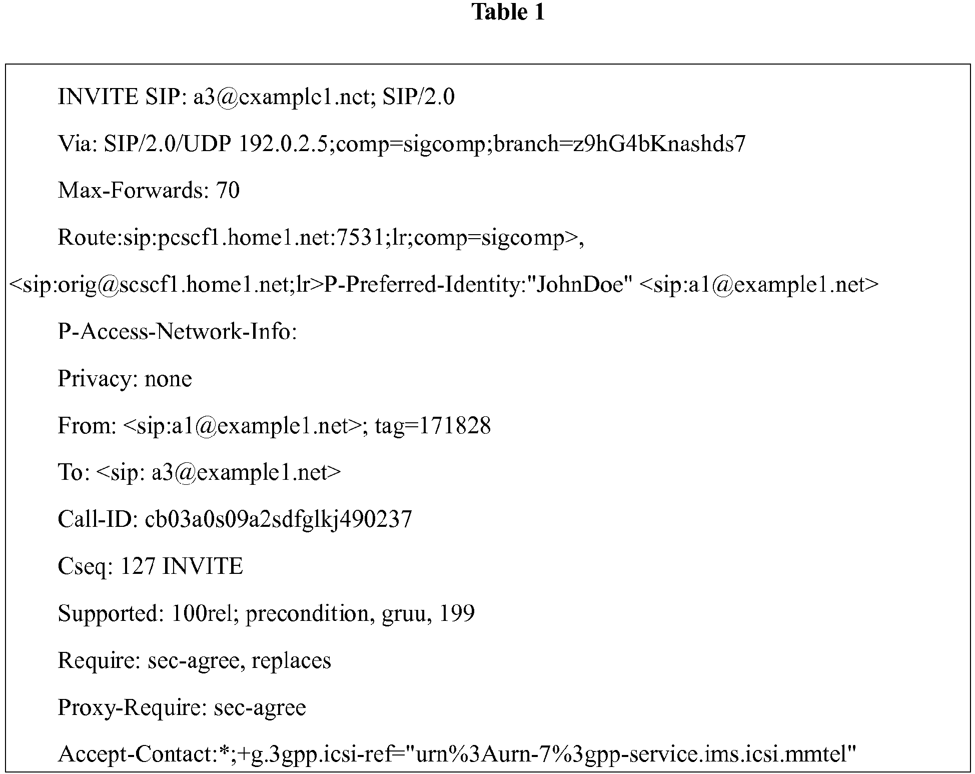

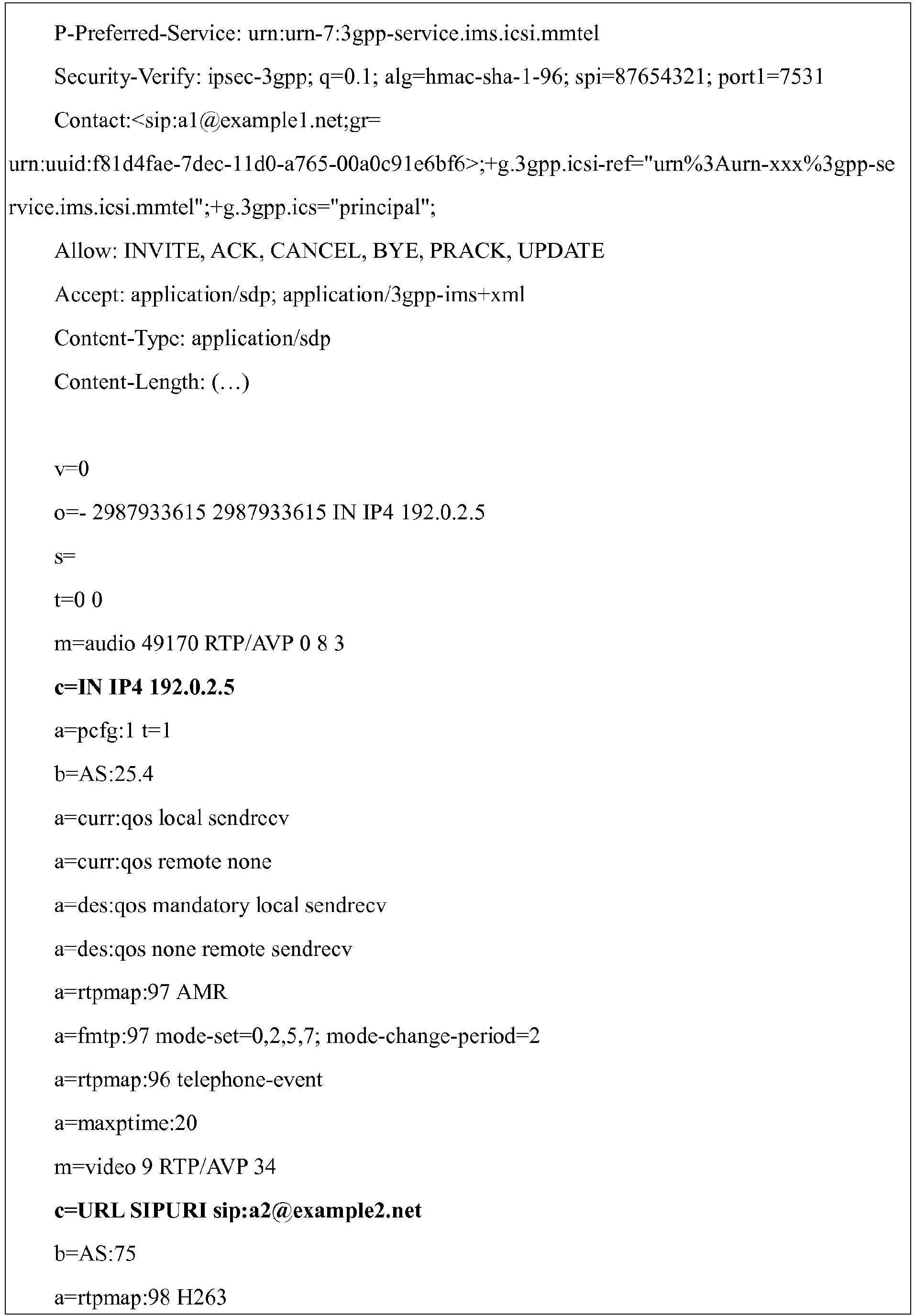

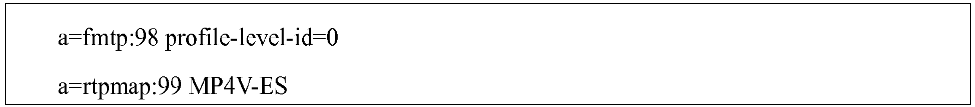

As shown in the foregoing Table 1, in the media stream description information, first connection information C-linel is c=IN IP4 192.0.2.5, which describes address information of the control UE; second connection information C-line2 is c=URL SIPURI sip:a2@example2.net, which describes address information of the controlled UE. It is assumed that a port for establishing the media stream on the control UE is port xx. However, because the control UE does not determine the port for establishing the media stream on the controlled UE, port 9 is used instead, which indicates that the port is unknown.

202: After receiving the SIP INVITE request for establishing the collaborative session, the SCC AS sends a SIP INVITE request to the controlled UE on behalf of the remote UE so as to establish a media connection of Media-B on the controlled UE.

Content of the SIP INVITE request in this step may be as shown in Table 2 in the following:

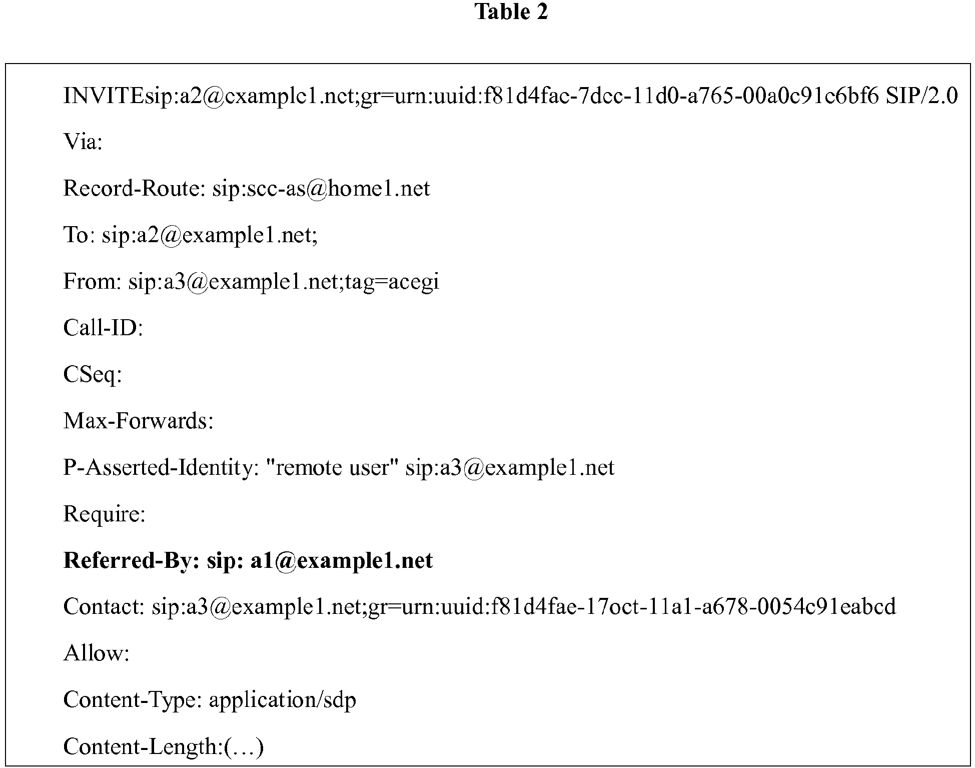

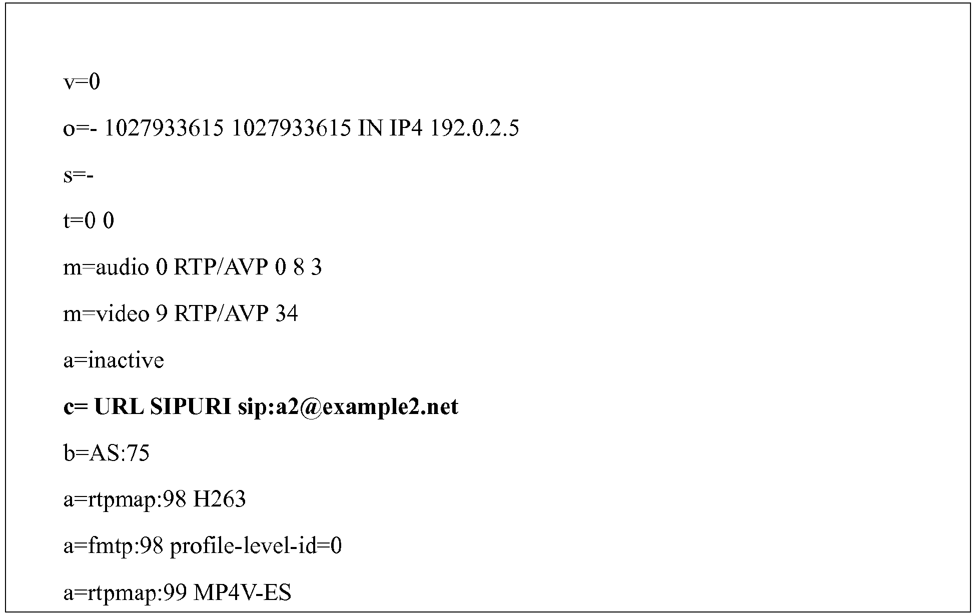

203: After receiving the SIP INVITE request, the controlled UE returns an SIP 183 (Session Progress) response, where the response carries an SDP answer (answer) that includes information such as IP address, port number, and media encoding or decoding of the controlled UE.

Content of the 183 response in this step may be as shown in Table 3 in the following:

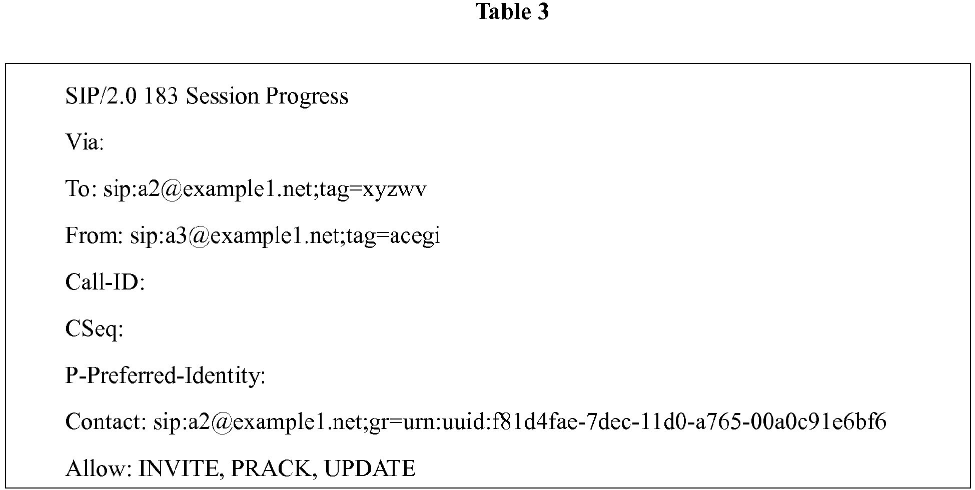

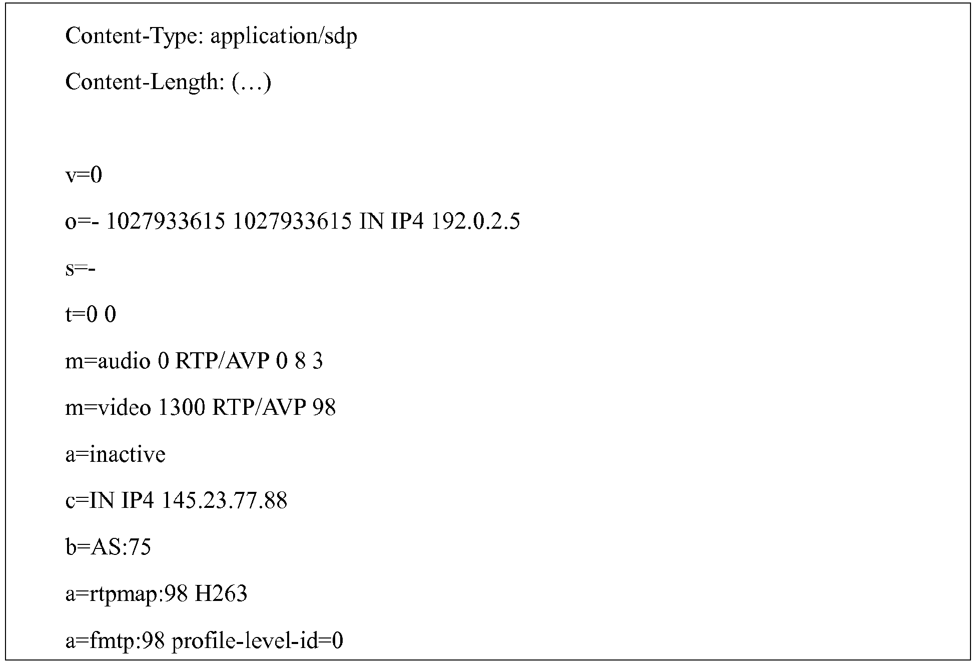

As shown in the foregoing Table 3, in the media description information, the connection information C-line is c= IN IP4 145.23.77.88, that is, specific address information returned by the controlled UE, which includes network type IN, address type IP4, and specific address 145.23.77.88 for establishing the media stream on the controlled UE.

204: After receiving the response returned by the controlled UE, the SCC AS sends an INVITE request to the remote UE, where the INVITE request should carry information such as IP addresses, port numbers, and media encoding or decoding of the controlled UE and the control UE.

205-206: The remote UE returns an SIP 200 OK response to the control UE, where the response carries an SDP answer (answer) that includes information such as IP address, port number, and media encoding or decoding of the remote UE.

207: The SCC AS receives a response from the remote UE, and refreshes the media stream information on the controlled UE.

208: The controlled UE returns an SIP 200 OK success response.

So far, the collaborative session is successfully established, signaling control is kept on the control UE, Media-A is established between the control UE and the remote UE, and Media-B is established between the controlled UE and the remote UE.

In the method provided in this embodiment, through a manner of extending the C-line in the SDP, the control UE is enabled to send to the SCC AS the session establishment request which carries media stream description information, where the media stream description information is used to instruct that media streams need to be established on the controlled UE and the control UE with the remote UE, so that the SCC AS may establish media streams on the controlled UE and the control UE with the remote UE at the same time according to the media stream description information, thereby realizing that the media streams are established on different UEs at the same time.

### Embodiment 3

This embodiment provides a method for establishing a collaborative session, and also takes an application scene of establishing the collaborative session as described in a second embodiment as an example, where a new network type, a new address type, and a corresponding address are defined in C-line of the SDP to carry address information of a controlled UE. This embodiment, however, adopts an establishment manner which is different from that in the foregoing second embodiment. A network control device establishes a media stream on the controlled UE with a remote UE according to media stream description information that is carried in a received session establishment request, which specifically includes:
the network control device sends a session establishment request to the remote UE, and acquires media stream information on the remote UE according to a session establishment response returned by the remote UE;
sends a session establishment request to the controlled UE, where the session establishment request sent to the controlled UE carries acquired media stream information that is on the remote UE, and acquires media stream information on the controlled UE according to a session establishment response returned by the controlled UE; and
sends acquired media stream information that is on the controlled UE to the remote UE.

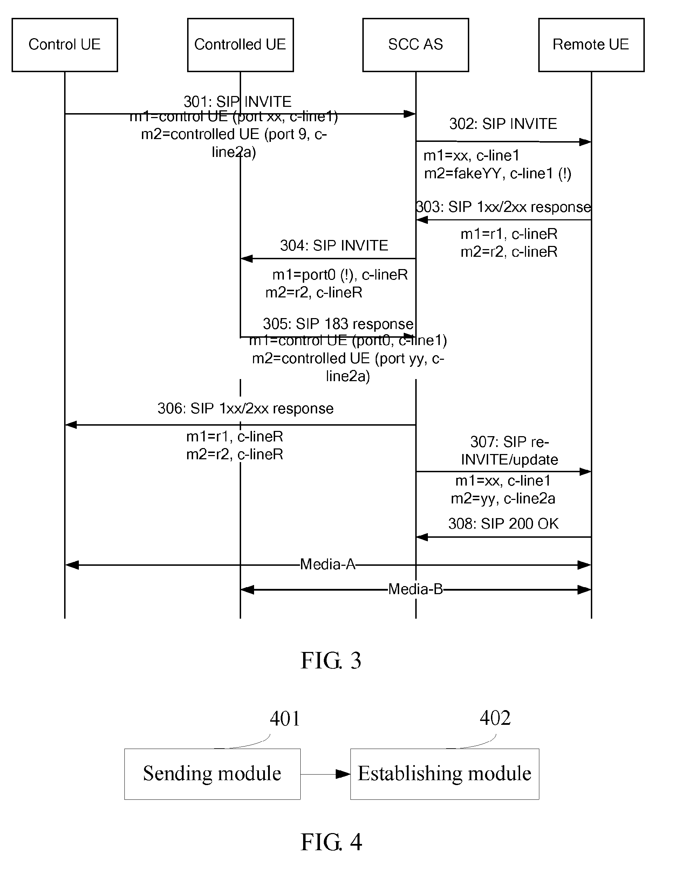

The method provided in this embodiment is described in detail in the following. Referring to FIG. 3, a process of the method is specifically as follows:

301: The control UE sends to an SCC AS an SIP INVITE request for establishing a collaborative session, where the request carries media stream description information, which is used to instruct that a media stream be established on the control UE with the remote UE and a media stream be established on the controlled UE with the remote UE.

Content of the SIP INVITE request in this step may be as shown in Table 4 in the following:

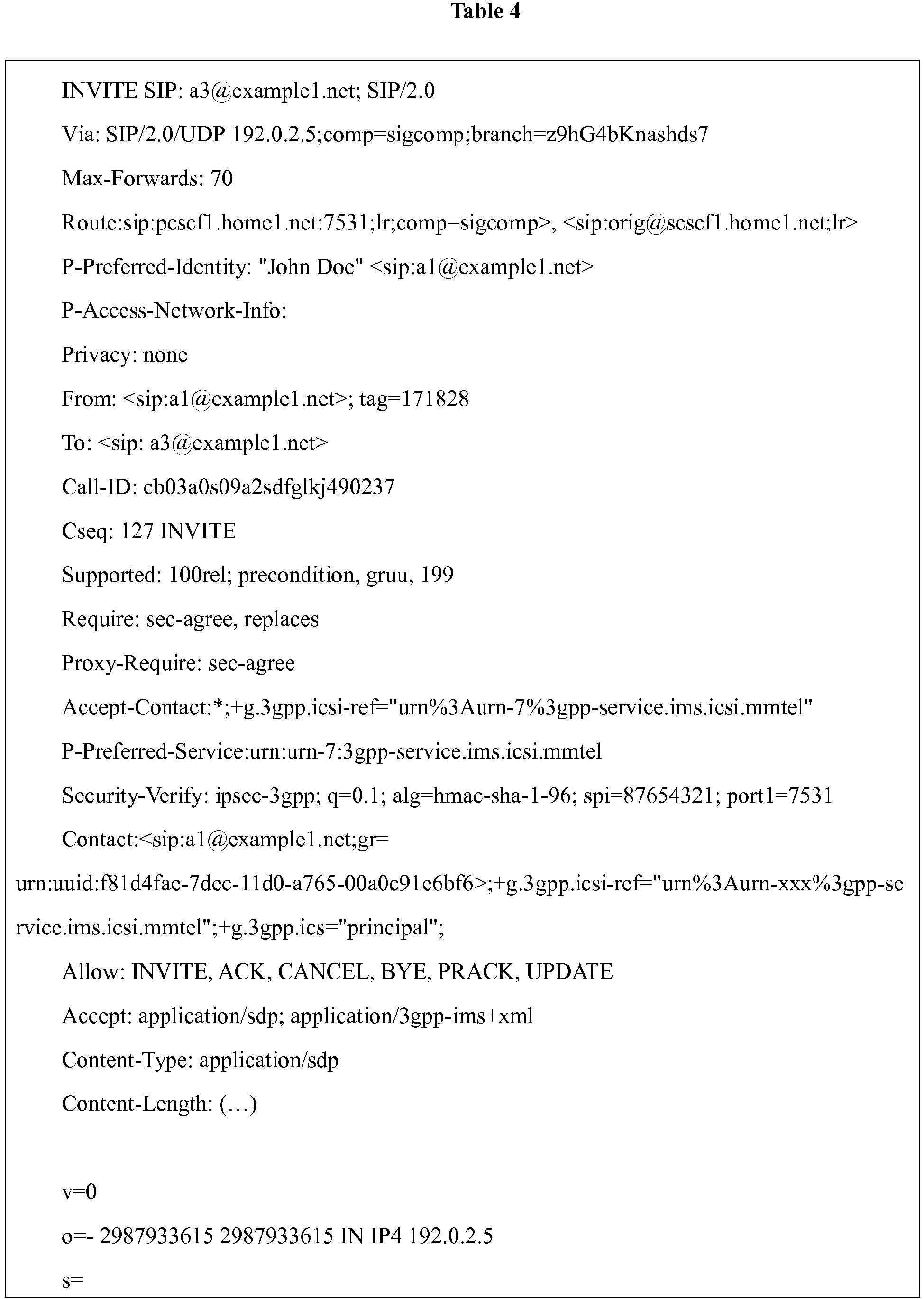

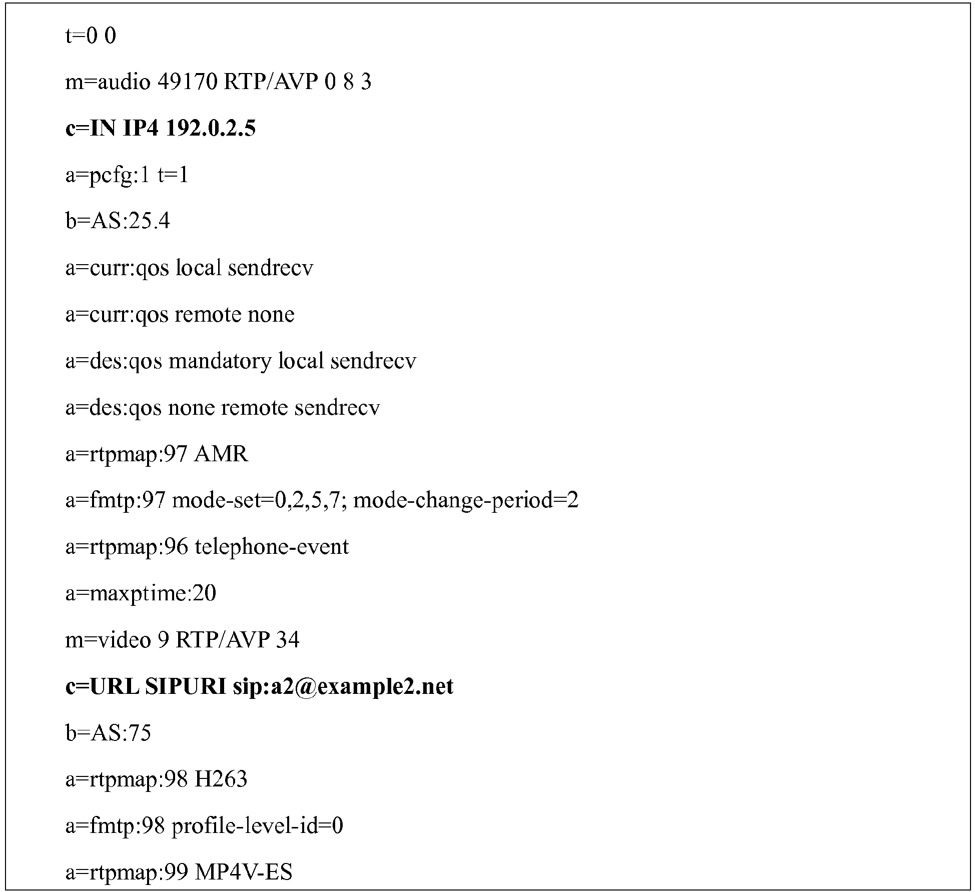

As shown in the foregoing Table 4, in the media stream description information, first connection information C-linel is c=IN IP4 192.0.2.5, which describes address information of the control UE; second connection information C-line2 is c=URL SIPURI sip:a2@example2.net, which describes address information of the controlled UE. It is assumed that a port for establishing the media stream on the control UE is port xx. However, because the control UE does not determine the port for establishing the media stream on the controlled UE, port 9 is used instead, which indicates that the port is unknown.

302: The SCC AS forwards the SIP INVITE request to the remote UE.

Content of the SIP INVITE request in this step may be as shown in Table 5 in the following:

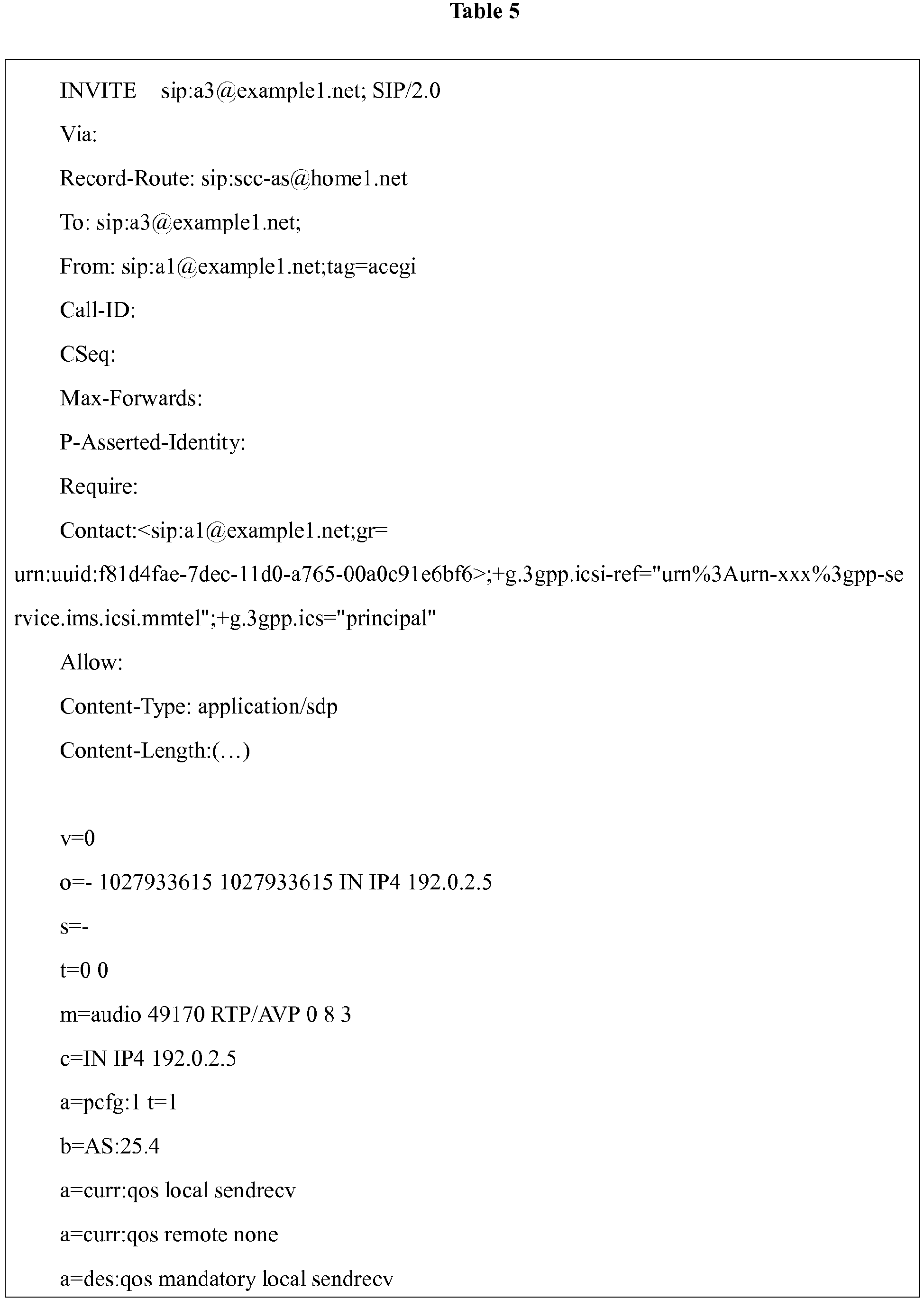

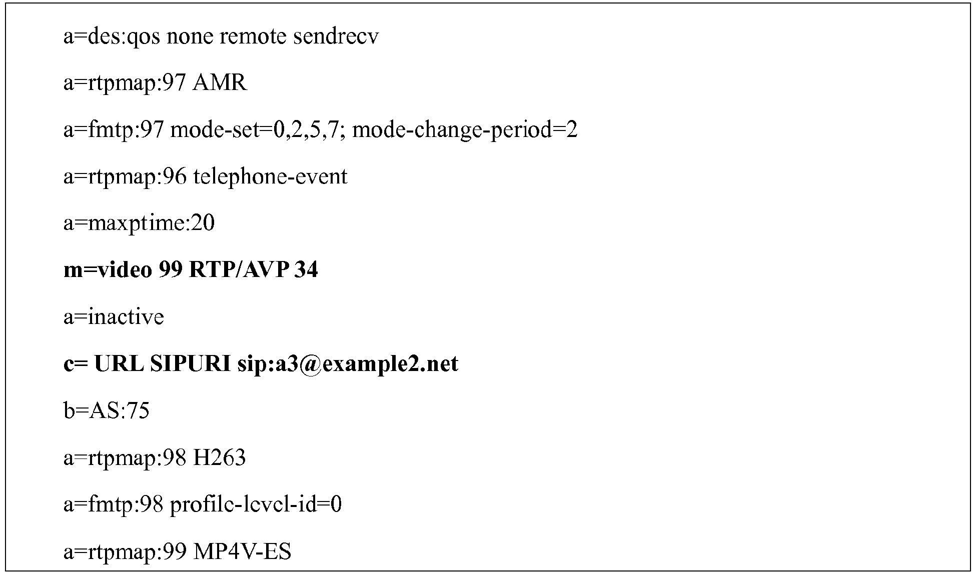

303: The remote UE returns an SIP 1*xx or 200 OK response, which carries an SDP answer that includes information such as IP address, port number, and media encoding or decoding of the remote UE.

304: The SCC AS sends an SIP INVITE request to the controlled UE to establish a media connection of Media-B on the controlled UE.

Content of the SIP INVITE request in this step may be as shown in Table 6 in the following:

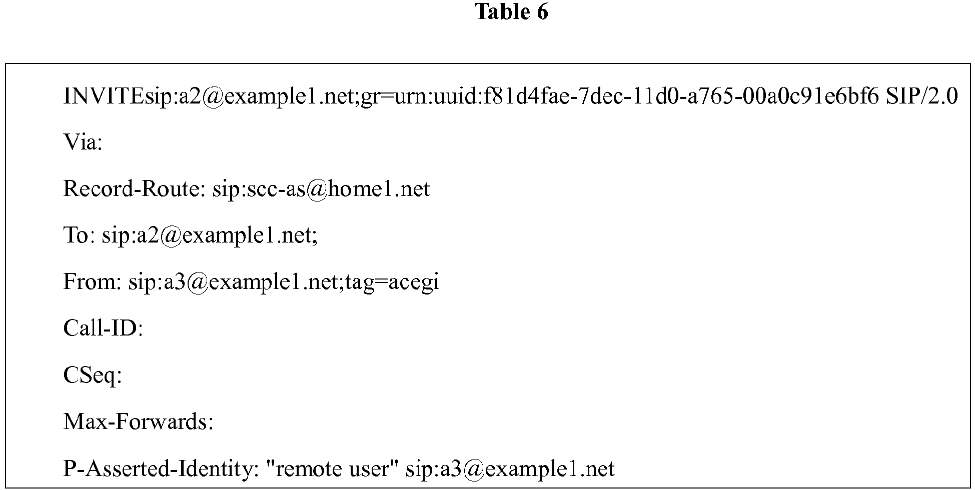

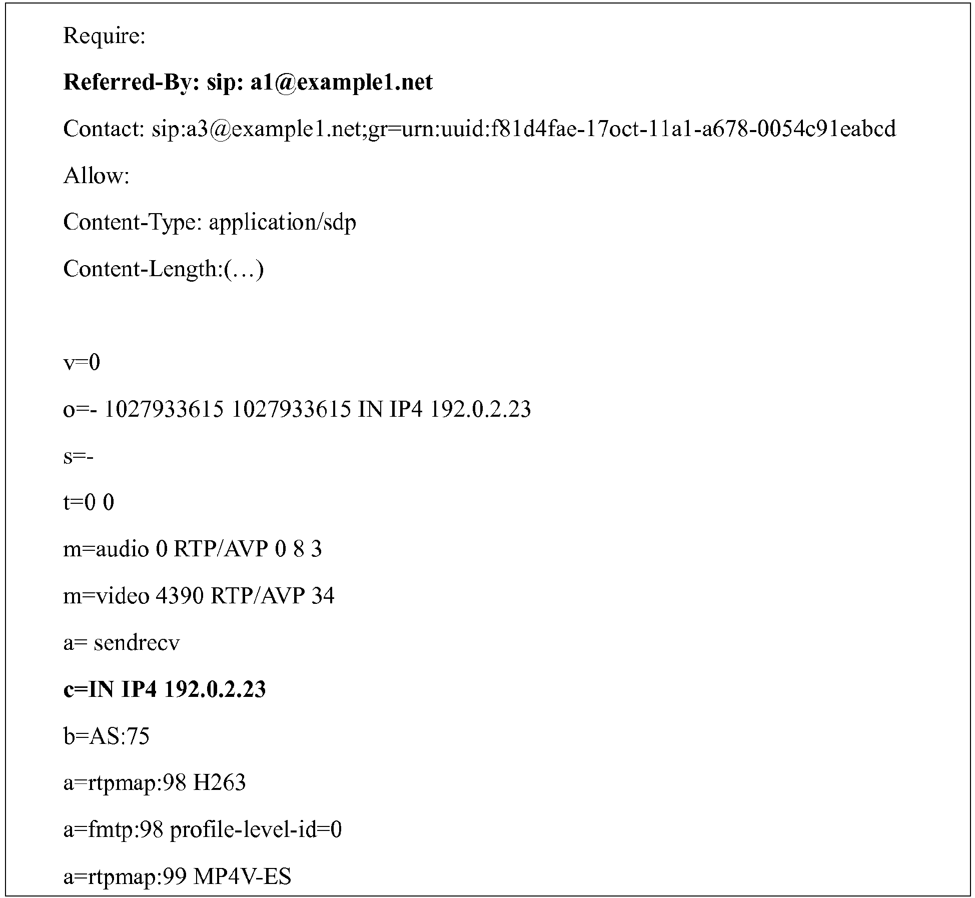

As shown in the foregoing Table 6, in the media description information, connection information C-linel is c=IN IP4 192.0.2.23, which describes address information of the remote UE, and the port for establishing the media stream with the controlled UE is r2.

305: The controlled UE returns an SIP 183 (Session Progress) response that carries the SDP answer to media-B.

For this step, the SIP 183 response should include media stream information that is on the controlled UE, and include information such as the port for establishing the media stream on the controlled UE being port yy, an IP address, and media encoding or decoding.

306: The SCC AS returns an SIP 1xx/2xx response to the control UE, where the response carries an SDP answer.

The SDP answer includes media stream information on the remote UE (information such as IP address, port number, and media encoding or decoding of the remote UE).

307: The SCC AS sends an SIP re-INVITE/UPDATE request to the remote UE, where the request carries media stream information of the controlled UE so as to refresh an SDP offer of media-B on the remote UE and set an attribute to sendrecv.

308: After refreshing, the remote UE returns an SIP 200 OK response.

So far, the collaborative session is successfully established, signaling control is kept on the control UE, Media-A is established between the control UE and the remote UE, and Media-B is established between the controlled UE and the remote UE.

In the method provided in this embodiment, through adopting a manner of extending the C-line in the SDP, the control UE is enabled to send to the SCC AS the session establishment request which carries media stream description information, where the media stream description information is used to instruct that a media stream be established on the controlled UE, so that the SCC AS may establish media streams on the control UE and the controlled UE with the remote UE at the same time according to the media stream description information, thereby realizing that media streams are established on different UEs at the same time.

### Embodiment 4

Referring to FIG. 4, this embodiment provides a control UE, where the control UE includes:
a sending module 401, configured to send a session establishment request that carries media stream description information to a network control device, where the media stream description information is used to instruct that a media stream be established on the control UE with a remote UE and a media stream be established on a controlled UE with the remote UE, so that according to the media stream description information, the network control device establishes on the control UE a media stream with the remote UE, and establishes on the controlled UE a media stream with the remote UE; and
an establishing module 402, configured to establish a media stream with the remote UE by the network control device.

The media stream description information carried in the session establishment request sent by the sending module 401 includes address information of the controlled UE, which is used to instruct that a media stream be established on the controlled UE.

A manner for including the address information of the controlled UE in the media stream description information includes:
defining a new network type and a new address type in connection information C-line in the session description protocol SDP, and describing the address information of the controlled UE by the new network type and the new address type.

The control UE provided in this embodiment, through adopting a manner of extending the C-line in the SDP, realizes that the session establishment request carries the media stream description information which is used to instruct that a media stream be established on the controlled UE, so that the network control device may establish media streams on the control UE and the controlled UE with the remote UE at the same time according to the media stream description information, thereby realizing that media streams are established on different UEs at the same time. Further, signaling control may be kept on the control UE.

### Embodiment 5

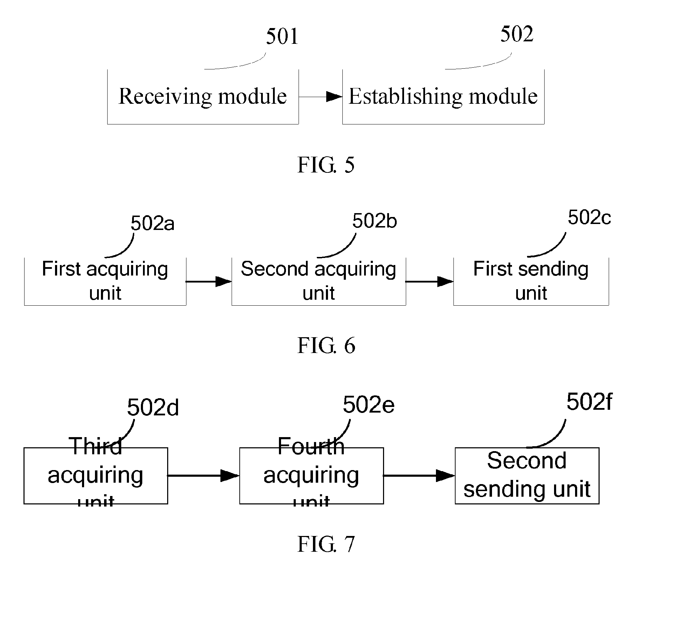

Referring to FIG. 5, this embodiment provides a network control device, where the network control device includes:
a receiving module 501, configured to receive a session establishment request that carries media stream description information and is sent by a control user equipment UE, where the media stream description information is used to instruct that a media stream be established on the control UE with a remote UE and a media stream be established on a controlled UE with the remote UE; and
an establishing module 502, configured to, according to the media stream description information carried in the session establishment request that is received by the receiving module 501, establish on the control UE a media stream with the remote UE, and establish on the controlled UE a media stream with the remote UE.

The establishing module 502 is specifically configured to, when a media stream is established on the controlled UE with the remote UE, acquire media stream information that is on the controlled UE and media stream information that is on the remote UE, send acquired media stream information that is on the controlled UE to the remote UE, and send acquired media stream information that is on the remote UE to the controlled UE.

Referring to FIG. 6, the establishing module 502 specifically includes:
a first acquiring unit 502a, configured to send a session establishment request to the controlled UE, and according to a session establishment response returned by the controlled UE, acquire media stream information that is on the controlled UE;
a second acquiring unit 502b, configured to send a session establishment request to the remote UE, where the session establishment request sent to the remote UE carries the media stream information that is on the controlled UE and is acquired by the first acquiring unit 502a, and according to a session establishment response returned by the remote UE, acquire media stream information that is on the remote UE; and
a first sending unit 502c, configured to send to the controlled UE the media stream information that is on the remote UE and is acquired by the second acquiring unit 502b.

Alternatively, referring to FIG. 7, the establishing module 502 specifically includes:
a third acquiring unit 502d, configured to send a session establishment request to the remote UE, and according to a session establishment response returned by the remote UE, acquire media stream information that is on the remote UE;
a fourth acquiring unit 502e, configured to send a session establishment request to the controlled UE, where the session establishment request sent to the controlled UE carries the media stream information that is on the remote UE and is acquired by the third acquiring unit 502d, and according to a session establishment response returned by the controlled UE, acquire media stream information that is on the controlled UE; and
a second sending unit 502f, configured to send to the remote UE the media stream information that is on the controlled UE and is acquired by the fourth acquiring unit 502e.

By receiving the session establishment request that carries the media stream description information and is sent by the control UE, and according to the media stream description information, establishing media streams on the control UE and the controlled UE with the remote UE at the same time, the network control device provided in this embodiment realizes that media streams are established on different UEs at the same time. Further, signaling control may be kept on the control UE.

### Embodiment 6

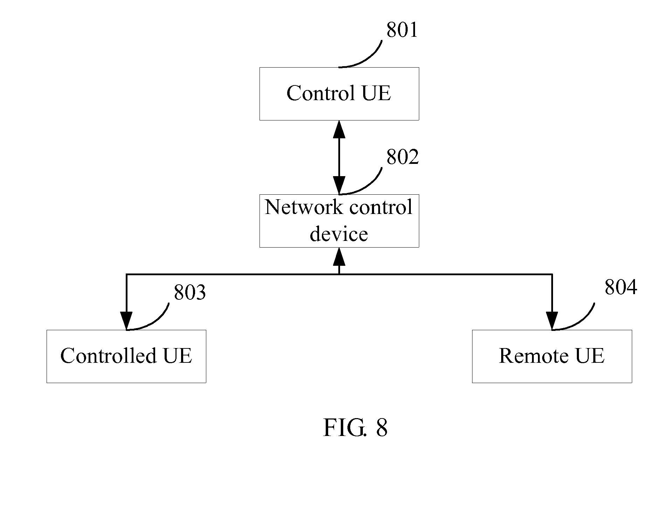

Referring to FIG. 8, this embodiment provides a system for establishing a collaborative session, where the system includes a control UE 801 and a network control device 802, where
the control UE 801 is as the control UE provided in the foregoing fourth embodiment, and the network control device 802 is as the network control device provided in the foregoing fifth embodiment, which may specifically be an SCC AS, and is not specifically limited in this embodiment.

The system further includes a controlled UE 803 and a remote UE 804.

In the system provided in this embodiment, through adopting a manner of extending C-line in the SDP, the control UE is enabled to send to the network control device a session establishment request which carries media stream description information, where the media stream description information instructs that a media stream be established on a controlled UE, so that according to the media stream description information, the network control device may establish media streams on the control UE and the controlled UE with a remote UE at the same time, thereby realizing that media streams are established on different UEs at the same time.

It should be noted that when the control UE provided in the foregoing embodiments establishes the collaborative session, it is described by taking division of each foregoing function module as an example; in actual application, according to requirements, the foregoing functions may be allocated to different function modules to complete, that is, an internal structure of the device is divided into different function modules to complete all or a part of functions in the foregoing description. In addition, the system for establishing the collaborative session and the network control device that are provided in the foregoing embodiments and the method embodiment for establishing the collaborative session belong to a same concept, and for their specific implementation process, detailed reference may be made to the method embodiment, which is not repeatedly described here again.

Sequence numbers of the foregoing embodiments of the present invention are merely for description purpose but do not represent that the embodiments are good or bad.

A part of steps in the embodiments of the present invention may be implemented by utilizing software. A corresponding software program may be stored in a readable storage medium, such as a compact disk or a hard disk.

The foregoing descriptions are only exemplary embodiments of the present invention and are not intended to limit the present invention. Any modification, equivalent replacement, or improvement made within the spirit and principle of the present invention shall fall within the protection scope of the present invention.

## Claims

1. A method for establishing a collaborative session, comprising:
receiving, by a network control device, a session establishment request sent by a control user equipment UE, wherein the session establishment request carries media stream description information; and
according to the media stream description information carried in the received session establishment request, establishing, by the network control device, on the control UE a media stream with a remote UE, and establishing on a controlled UE a media stream with the remote UE.

2. The method according to claim 1, wherein the media stream description information comprises address information of the controlled UE, and is used to instruct that a media stream be established on the controlled UE.

3. The method according to claim 2, wherein the media stream description information comprising the address information of the controlled UE comprises:
defining a new network type and a new address type in connection information C-line in the session description protocol SDP, and describing the address information of the controlled UE by the new network type and the new address type.

4. The method according to claim 3, wherein:
the new network type comprises but is not limited to one of the following: session initiation protocol SIP, universal resource locator URL, TEL, and universal resource indicator URI; and
the new address type comprises but is not limited to one of the following: SIPURI, SIPSURI, and TELRUI.

5. The method according to claim 1, wherein according to the media stream description information carried in the received session establishment request, establishing, by the network control device, on the controlled UE the media stream with the remote UE specifically comprises:
acquiring media stream information on the controlled UE and media stream information on the remote UE, sending acquired media stream information that is on the controlled UE to the remote UE, and sending acquired media stream information that is on the remote UE to the controlled UE.

6. The method according to claim 1 or 5, wherein according to the media stream description information carried in the received session establishment request, establishing, by the network control device, on the controlled UE the media stream with the remote UE specifically comprises:
sending, by the network control device, a session establishment request to the controlled UE, and according to a session establishment response returned by the controlled UE, acquiring media stream information that is on the controlled UE;
sending a session establishment request to the remote UE, wherein the session establishment request sent to the remote UE carries acquired media stream information that is on the controlled UE, and according to a session establishment response returned by the remote UE, acquiring media stream information that is on the remote UE; and
sending acquired media stream information that is on the remote UE to the controlled UE.

7. The method according to claim 1 or 5, wherein according to the media stream description information carried in the received session establishment request, establishing, by the network control device, on the controlled UE the media stream with the remote UE specifically comprises:
sending, by the network control device, a session establishment request to the remote UE, and according to a session establishment response returned by the remote UE, acquiring media stream information that is on the remote UE;
sending a session establishment request to the controlled UE, wherein the session establishment request sent to the controlled UE carries acquired media stream information that is on the remote UE, and according to a session establishment response returned by the controlled UE, acquiring media stream information that is on the controlled UE; and
sending acquired media stream information that is on the controlled UE to the remote UE.

8. A control user equipment UE, wherein the control UE comprises:
a sending module, configured to send a session establishment request that carries media stream description information to a network control device, so that according to the media stream description information, the network control device establishes on the control UE a media stream with a remote UE, and establishes on a controlled UE a media stream with the remote UE; and
an establishing module, configured to establish a media stream with the remote UE by the network control device.

9. The control UE according to claim 8, wherein the media stream description information carried in the session establishment request sent by the sending module comprises address information of the controlled UE, and is used to instruct that a media stream be established on the controlled UE.

10. The control UE according to claim 9, wherein the media stream description information carried in the session establishment request sent by the sending module comprising the address information of the controlled UE comprises:
defining a new network type and a new address type in connection information C-line in the session description protocol SDP, and describing the address information of the controlled UE by the new network type and the new address type.

11. A network control device, wherein the network control device comprises:
a receiving module, configured to receive a session establishment request sent by a control user equipment UE, wherein the session establishment request carries media stream description information; and
an establishing module, configured to, according to the media stream description information carried in the session establishment request which is received by the receiving module, establish on the control UE a media stream with a remote UE, and establish on a controlled UE a media stream with the remote UE.

12. The network control device according to claim 11, wherein the establishing module is specifically configured to, when a media stream is established on the controlled UE with the remote UE, acquire media stream information that is on the controlled UE and media stream information that is on the remote UE, and send acquired media stream information that is on the controlled UE to the remote UE and send acquired media stream information that is on the remote UE to the controlled UE.

13. The network control device according to claim 11 or 12, wherein the establishing module specifically comprises:
a first acquiring unit, configured to send a session establishment request to the controlled UE, and according to a session establishment response returned by the controlled UE, acquire media stream information that is on the controlled UE;
a second acquiring unit, configured to send a session establishment request to the remote UE, wherein the session establishment request sent to the remote UE carries the media stream information that is on the controlled UE and is acquired by the first acquiring unit, and according to a session establishment response returned by the remote UE, acquire media stream information that is on the remote UE; and
a first sending unit, configured to send the media stream information that is on the remote UE and is acquired by the second acquiring unit to the controlled UE.

14. The network control device according to claim 11 or 12, wherein the establishing module specifically comprises:
a third acquiring unit, configured to send a session establishment request to the remote UE, and according to a session establishment response returned by the remote UE, acquire media stream information that is on the remote UE;
a fourth acquiring unit, configured to send a session establishment request to the controlled UE, wherein the session establishment request sent to the controlled UE carries the media stream information that is on the remote UE and is acquired by the third acquiring unit, and according to a session establishment response returned by the controlled UE, acquire media stream information that is on the controlled UE; and
a second sending unit, configured to send to the remote UE the media stream information that is on the controlled UE and is acquired by the fourth acquiring unit.

15. A system for establishing a collaborative session, wherein the system comprises a control user equipment UE and a network control device; wherein
the control UE is the control UE according to any one of claims 8 to 10; and
the network control device is the network control device according to any one of claims 11 to 14.
